Europäisches Patentamt

European Patent Office

Office européen des brevets

(11) Veröffentlichungsnummer: **0 416 222 A2**

# EUROPÄISCHE PATENTANMELDUNG

(21) Anmeldenummer: 90110784.7

(22) Anmeldetag: 07.06.90

(51) Int. Cl.5: **G02B 27/00**, B60R 1/00

(30) Priorität: 08.09.89 DE 3929842

(43) Veröffentlichungstag der Anmeldung:
**13.03.91 Patentblatt 91/11**

(84) Benannte Vertragsstaaten:
**DE ES FR GB IT SE**

(71) Anmelder: **VDO Adolf Schindling AG**
**Gräfstrasse 103**

**W-6000 Frankfurt/Main 90(DE)**

(72) Erfinder: **Hähl, Manfred**
**Bruchfeldstrasse 90**
**W-6000 Frankfurt/Main 71(DE)**

(74) Vertreter: **Klein, Thomas, Dipl.-Ing. (FH)**
**Sodener Strasse 9 Postfach 6140**
**W-6231 Schwalbach a. Ts.(DE)**

(54) Anzeigeeinrichtung für Fahrzeuge.

(57) Die Erfindung bezieht sich auf eine Anzeigeeinrichtung für Fahrzeuge mit einer Informationen darstellenden Anzeige 4, deren dargestellte Informationen entlang der optischen Achse 15 ihres Strahlengangs 10 über einen in einem Winkel 16 zur Anzeige 4 angeordenten Spiegel 6 zu einer Abbildungsoptik 5 umgelenkt werden. Die optische Achse 15 trifft unter einem rechten Winkel 17 auf die Abbildungsoptik 5 auf. Durch die Abbildungsoptik 5 sind die dargestellten Informationen auf die Frontscheibe 11 des Fahrzeugs 1 projizierbar. Der Strahlengang 10 der dargestellten Informationen zwischen dem Spiegel 6 und der Abbildungsoptik 5 ist durch einen ersten und einen zweiten Umlenkspiegel 7 und 8 umgelenkt. Dabei ist entlang des Strahlengangs 10 der erste Umlenkspiegel 7 gegenüber dem Spiegel 6 und der zweite Umlenkspiegel 8 gegenüber dem ersten Umlenkspiegel derart jeweils um einen Winkel 14 geneigt, daß sich die optische Achse 15 zwischen Anzeige 4 und Abbildungsoptik 5 zumindest einmal kreuzt.

Figur 1

# ANZEIGEEINRICHTUNG FÜR FAHRZEUGE

Die Erfindung bezieht sich auf eine Anzeigeeinrichtung für Fahrzeuge, insbesondere für Kraftfahrzeuge, mit einer Informationen darstellenden Anzeige, deren dargestellte Informationen entlang der optischen Achse ihres Strahlengangs über einen in einem Winkel zur Anzeige angeordneten Spiegel zu einer Abbildungsoptik umgelenkt werden, wobei die optische Achse unter einem rechten Winkel auf die Abbildungsoptik auftrifft und wobei die dargestellten Informationen durch die Abbildungsoptik auf die Frontscheibe des Fahrzeuges projizierbar sind.

Derartige bekannte Anzeigevorrichtungen dienen dazu, die darzustellenden Informationen über die Frontscheibe so direkt in das Sichtfeld des Autofahrers einzu spiegeln, daß er diese erkennen kann, ohne daß der Blick von der Straße gewandt werden muß. Durch die Abbildungsoptik schweben die Informationen scheinbar vor dem Auto in der Luft, so daß das Auge zum bequemen Lesen auf unendlich scharf gestellt bleiben kann.

Um eine verzerrte Darstellung im äußeren Randbereich der Informationen durch Abberation der Abbildungsoptik auf einem vertretbar geringen Maß zu halten, konnten bei bekannten Anzeigeeinrichtungen nur Abbildungsoptiken relativ kurzer Brennweite verwendet werden. Abbildungsoptiken mit langer Brennweite waren aufgrund des nur geringen vorhandenen Bauraumes im Kraftfahrzeug nicht verwendbar.

Aufgabe der Erfindung ist es daher, eine Anzeigeeinrichtung der eingangs genannten Art zu schaffen, die bei nur geringem erforderlichem Bauraum die Verwendung einer langbrennweitigen abbrationsarmen Abbildungsoptik ermöglicht.

Diese Aufgabe wird erfindungsgemäß dadurch gelöst, daß der Strahlengang der dargestellten Informationen zwischen dem Spiegel und der Abbildungsoptik durch zumindest einen ersten und einen zweiten Umlenkspiegel umgelenkt ist, wobei entlang des Strahlengangs der erste Umlenkspiegel gegenüber dem Spiegel und und zweite Umlenkspiegel gegenüber dem ersten Umlenkspiegel derart jeweils um einen Winkel geneigt sind, daß sich die optische Achse zwischen Anzeige und Abbildungsoptik zumindest einmal kreuzt. Durch diese Ausbildung kann innerhalb eines kleinen Bauraumes durch Umlenkung des Strahlengangs eine lange Brennweite der Abbildungsoptik und eine abberationsarme Ausgestaltung der Abbildungsoptik verwandt werden.

Vorzugsweise sind die Neigungswinkel zwischen dem Spiegel und dem ersten Umlenkspiegel sowie zwischen dem ersten Umlenkspiegel und dem zweiten Umlenkspiegel sowie gegebenenfalls zwischen weiteren entlang des Strahlenganges folgenden Umlenkspiegeln gleich sein.

Sind dabei zwei Umlenkspiegel angeordnet, beträgt der Neigungswinkel jeweils etwa 90° und trifft die optische Achse des Strahlengangs unter einem Winkel von 45° auf den Spiegel auf, so wird ein einer Kugelform angenähertes Spiegelsystem erreicht, das einen besonders geringen Bauraum erfordert.

Ist die Anzeige im Brennpunkt des Strahlengangs angeordnet, so erscheinen die Informationen scheinbar im Unendlichen vor dem Auto schwebend.

Sollen die Informationen aber scheinbar einige Meter vor dem Auto schwebend erscheinen, so kann die Anzeige in einem bestimmten Abstand zum Brennpunkt zwischen Brennpunkt und Spiegel angeordnet sein. Vorzugsweise werden dabei Spiegel und Umlenkspiegel so angeordnet, daß durch sie der Strahlengang zwischen Anzeige und Abbildungsoptik etwa gleichmäßig aufgeteilt ist.

Soll der Abstand der scheinbar vor der Frontscheibe erscheinenden Informationen variabel sein, so kann der bestimmte Abstand veränderbar einstellbar sein.

Zur Vermeidung von Verzerrungen im Randbereich der Informationen sind der Spiegel und die Umlenkspiegel vorzugsweise Planspiegel.

Um die Neigung der Frontscheibe so zu kompensieren, daß die auf die Frontscheibe projizierten Informationen in den Augenbereich des Fahrers gespiegelt werden, kann der Bereich der Frontscheibe auf die die Informationen projizierbar sind, mit einem Kombinator versehen sein, wobei der Kombinator vorzugsweise ein Reflexhologramm ist.

In einer einfachen Ausbildung kann der Kombinator aus einer Kombinatorfolie bestehen.

Ein Ausführungsbeispiel der Erfindung ist in der Zeichnung dargestellt und wird im folgenden näher beschrieben. Es zeigen

Figur 1 eine schematische Schnittdarstellung eines Kraftfahrzeugs mit einer Anzeigeeinrichtung,

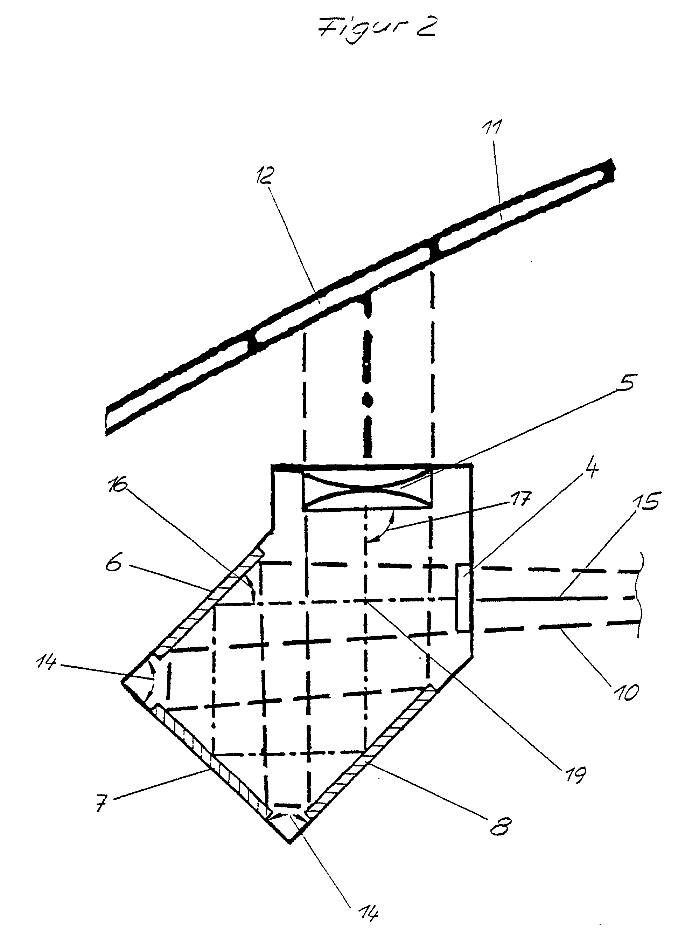

Figur 2 einen vergrößerten Ausschnitt aus Figur 1 mit der Anzeigeeinrichtung.

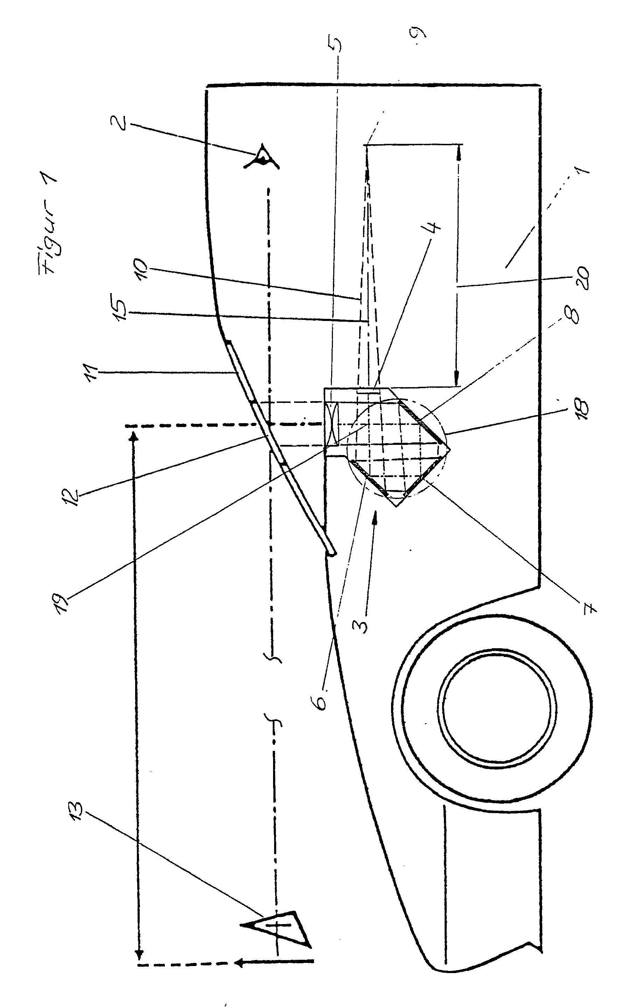

In Figur 1 sind schematisch die Konturen eines Kraftfahrzeugs 1 sowie mit einem Augensymbol 2 der Augenbereich eines Fahrers dargestellt.
Im Bereich des Armaturenbretts ist die Anzeigeeinrichtung 3 angeordnet, die aus einer Informationen darstellenden Anzeige 4, einer Abbildungsoptik 5 sowie einem Spiegel 6, einem ersten Umlenkspiegel 7 und einem zweiten Umlenkspiegel 8 besteht.

Die Anzeige 4 ist eine frei programmierbare Flüssigkristall-Anzeige mit einer Punktmatrix, so daß ein freies Design der Informationsinhalte der Anzeige ermöglicht wird.

Die Anzeige wird durch eine nicht dargestellte Lichtquelle erleuchtet.

Von einem Brennpunkt 9, der in einem Abstand 20 hinter der Anzeige 4 liegt, ist mit unterbrochener Linie ein Strahlengang 10 durch die Anzeige 4 zum Spiegel 6 dargestellt der von dem Spiegel 6 über den ersten Umlenkspiegel 7 und den zweiten Umlenkspiegel 8 zur Abbildungsoptik 5 umgelenkt wird.

Diese projiziert die Informationen auf den Bereich der Frontscheibe 11 des Kraftfahrzeugs 1, der mit einem Kombinator 12 versehen ist.

Durch den Kombinator 12 werden trotz stark geneigter Frontscheibe 11 die Informationen in den Augenbereich 2 gespiegelt.

Die Informationen werden durch die Anzeigeeinrichtung 3 mit ihrer Abbildungsoptik 5 so auf die Frontscheibe 11 projiziert, daß sie im Blickfeld des Fahrers scheinbar über den vorderen Teil des Kraftfahrzeugs 1 schwebend erscheinen, wie durch das Informationssymbols 13 dargestellt ist.

Der Spiegel 6 sowie der erste und der zweite Umlenkspiegel 7 und 8 sind unter gleichem Neigungswinkel 14 von 90° zueinander geneigt angeordnet, wobei die optische Achse 15 des Strahlengangs 10 von der Anzeige 4 her unter einem Winkel 16 von 45° auf den Spiegel 6 auftrifft.

Vom zweiten Umlenkspiegel 8 her trifft die optische Achse 15 unter einem rechten Winkel 17 auf die Abbildungsoptik 5 auf, wobei sie am Kreuzungspunkt 19 ihren Abschnitt zwischen Anzeige 4 und Spiegel 6 kreuzt.

Da der Spiegel 6 und die Umlenkspiegel 7 und 8 etwa innerhalb einer Kugelkontor 18 angeordnet sind und sich die optische Achse 15 auf ihrem Verlauf zwischen Anzeige 4 und Abbildungsoptik 5 kreuzt, ergibt sich ein optimal geringer erforderlicher Bauraum, innerhalb dem der relativ große Abschnitt der Brennweite zwischen Anzeige 4 und Abbildungsoptik 5 verläuft.

Eine veränderbare Einstellbarkeit des bestimmten Abstands 20 kann durch Austauschen der Abbildungsoptik 5 erfolgen. Eine andere Abbildungsoptik besitzt eine andere Brennweite, so daß sich dadurch auch der veränderte Abstand 20 ergibt.

**Ansprüche**

1. Anzeigeeinrichtung für Fahrzeuge, insbesondere für Kraftfahrzeuge, mit einer Informationen darstellenden Anzeige, deren dargestellte Informationen entlang der optischen Achse ihres Strahlenganges über einen, in einem Winkel zur Anzeige angeordneten Spiegel zu einer Abbildungsoptik umgelenkt werden, wobei die optische Achse unter einem rechten Winkel auf die Abbildungsoptik auftrifft und wobei die dargestellten Informationen durch die Abbildungsoptik auf die Frontscheibe des Fahrzeugs projizierbar sind, dadurch gekennzeichnet, daß der Strahlengang (10) der dargestellten Informationen zwischen dem Spiegel (6) und der Abbildungsoptik (5) durch zumindest einen ersten und einen zweiten Unlenkspiegel (7 und 8) umgelenkt ist, wobei entlang des Strahlengangs (10) der erste Umlenkspiegel (7) gegenüber dem Spiegel (6) und der zweite Umlenkspiegel (8) gegenüber dem ersten Umlenkspiegel (7) derart jeweils um einen Winkel (14) geneigt sind, daß sich die optische Achse (15) zwischen Anzeige (4) und Abbildungsoptik (5) zumindest einmal kreuzt.

2. Anzeigeeinrichtung nach Anspruch 1, dadurch gekennzeichnet, daß die Neigungswinkel (14) zwischen dem Spiegel (6) und dem ersten Umlenkspiegel (7) sowie zwischen dem ersten Umlenkspiegel (7) und dem zweiten Umlenkspiegel (5) sowie gegebenenfalls zwischen weiteren entlang des Strahlengangs (10) folgenden Umlenkspiegeln gleich sind.

3. Anzeigeeinrichtung nach Anspruch 2, dadurch gekennzeichnet, daß zwei Umlenkspiegel (7 und 8) angeordnet sind, der Neigungswinkel (14) jeweils etwa 90° beträgt und die optische Achse (15) des Strahlengangs (10) unter einem Winkel (16) von 45° auf den Spiegel (6) auftrifft.

4. Anzeigeeinrichtung nach einem der vorhergehenden Ansprüche, dadurch gekennzeichnet, daß die Anzeige im Brennpunkt des Strahlengangs angeordnet ist.

5. Anzeigeeinrichtung nach einem der Ansprüche 1 bis 3, dadurch gekennzeichnet, daß die Anzeige (4) in einem bestimmten Abstand (20) zum Brennpunkt (9) zwischen Brennpunkt (9) und Spiegel (6) angeordnet ist.

6. Anzeigeeinrichtung nach Anspruch 5, dadurch gekennzeichnet, daß der bestimmte Abstand veränderbar einstellbar ist.

7. Anzeigeeinrichtung nach einem der vorhergehenden 35 Ansprüche, dadurch gekennzeichnet, daß der Spie gel (6) und die Umlenkspiegel (7 und 8) Planspiegel sind.

8. Anzeigeeinrichtung nach einem der vorhergehenden Ansprüche, dadurch gekennzeichnet, daß der Bereich der Frontscheibe (11), auf den die Informationen projizierbar sind, mit einem Kombinator (12) versehen ist.

9. Anzeigeeinrichtung nach Anspruch 8, dadurch gekennzeichnet, daß der Kombinator (12) ein Reflexionshologramm ist.

10. Anzeigeeinrichtung nach Anspruch 8, dadurch gekennzeichnet, daß der Kombinator aus einer Kombinatorfolie besteht.

Figur 1

EP 0 416 222 A2

Figur 2